# EUROPÄISCHE PATENTSCHRIFT

(11) **EP 3 379 490 B1**
(45) Veröffentlichungstag und Bekanntmachung des Hinweises auf die Patenterteilung: **14.10.2020**
(21) Anmeldenummer: 18000223.0
(22) Anmeldetag: 07.03.2018
(51) Int. Cl.: G06T 7/00

(54) **VERFAHREN UND VORRICHTUNG ZUM PRÜFEN VON FILTERZIGARETTEN IN EINEM VERPACKUNGSPROZESS**
METHOD AND DEVICE FOR TESTING FILTER CIGARETTES IN A PACKAGING PROCESS
PROCÉDÉ ET DISPOSITIF DE VÉRIFICATION DE CIGARETTES À FILTRE DANS UN PROCESSUS D'EMBALLAGE

(30) Priorität: 21.03.2017 DE 102017002704
(43) Veröffentlichungstag der Anmeldung: 26.09.2018
(73) Patentinhaber: Focke & Co. (GmbH & Co. KG), 27283 Verden (DE)
(72) Erfinder: Linck, Christian, 27283 Verden/Walle (DE)
(74) Vertreter: Aulich, Martin

(56) Entgegenhaltungen:
- EP-A1- 1 057 727
- EP-A1- 1 674 395
- EP-A1- 2 677 273
- US-A1- 2015 264 319

## Beschreibung

Die vorliegende Erfindung betrifft ein insbesondere automatisches Verfahren und eine Vorrichtung zum Prüfen von Filterzigaretten in einem Verpackungsprozess, in dem die Filterzigaretten in Zigarettenpackungen verpackt werden, sowie zum weiteren Handhaben der Filterzigaretten während des Verpackungsprozesses.

Die gruppenweise Erfassung von Filterstirnseiten von Standard-Filterzigaretten zur Anwesenheits- und Qualitätskontrolle der Filterzigaretten mittels Kameras ist bekannt. Vermehrt werden vom Markt Filterzigaretten nachgefragt, deren Filterstirnseite nicht mehr konventionell geschlossen ausgebildet ist, sondern die beispielsweise eine zentrale, zylindrische Vertiefung aufweist (Hohlfilterzigaretten). Die gängigen Verfahren zum Prüfen solcher Filterzigaretten mit neuartigen Filtern stoßen hier an Grenzen.

Die Europäische Patentanmeldung EP 2 677 273 A1 zeigt eine Messvorrichtung zur optischen Prüfung von Zigarettenstirnflächen mit entsprechenden Kameras, die auf die Stirnflächen gerichtet sind. Die aufgenommenen Bilder der Stirnseiten werden auf Fehler der untersuchten Stirnfläche hin ausgewertet oder im Hinblick auf Qualitätskriterien.

Es ist daher Aufgabe der vorliegenden Erfindung, das eingangs genannte Verfahren sowie die eingangs genannte Vorrichtung weiterzuentwickeln.

Diese Aufgabe wird gelöst durch ein Verfahren mit den Merkmalen des Anspruchs 1 sowie eine Vorrichtung mit den Merkmalen des Anspruchs 15.

Erfindungsgemäß umfasst das eingangs genannte (automatische) Verfahren folgende weiteren (insbesondere automatisch ablaufenden) Maßnahmen:
a) Innerhalb des Verpackungsprozesses wird mittels einer (elektronischen) Kamera ein Bild mindestens eines bevorzugt kreisförmigen Teilbereichs der Stirnseite des Filters der jeweils zu prüfenden Filterzigarette aufgenommen.
b) Anhand von in dem aufgenommenen Bild enthaltenen Bildinformationen wird aus einem elektronischen Datenspeicher (insbesondere einer Datenbank), in dem unterschiedlichen Filterarten bzw. Filtertypen, insbesondere Kennungen dieser Filterarten, jeweils unterschiedliche Bildinformationen zugeordnet sind, diejenige Filterart identifiziert, die dem Filter der zu prüfenden Filterzigarette entspricht. Vorzugsweise sind dabei die unterschiedlichen Bildinformationen, die zu den jeweiligen Filterarten abgelegt sind, für die jeweilige Filterart repräsentativ bzw. charakterisierend. Im einfachsten Fall könnte beispielsweise jeder Filterart ein Referenzbild einer Filterstirnseite einer Referenzfilterzigarette mit einem Filter dieser Filterart sein.
c) Mindestens ein weiterer Verfahrensschritt im Verpackungsprozess erfolgt abhängig von der auf diese Weise identifizierten Filterart der zu prüfenden Filterzigarette.

Erstmalig werden erfindungsgemäß im Rahmen der optischen Prüfung von Filterzigaretten im Verpackungsprozess die Filter der zu prüfenden Filterzigaretten identifiziert bzw. ihrer Art nach unterschieden.

Hierdurch ist es beispielsweise möglich, in einem Verpackungsprozess bei Bedarf Filterzigaretten oder Filterzigarettengruppen zu detektieren, die "falsche" Filter aufweisen, also letztlich Fehlprodukte sind, und die entsprechend ausgesondert werden müssten. So eine Situation kann etwa nach einem sogenannten Brandchange auftreten, also einem Produktwechsel. So könnten beispielsweise in der Verpackungsanlage zunächst Filterzigaretten mit Filtern einer ersten Art verpackt werden, dann die Anlage auf ein anderes Produkt umgestellt werden und anschließend Filterzigaretten mit Filtern einer zweiten Art verpackt werden. In einem solchen Fall kann es passieren, dass sich nach dem Produktwechsel in der Anlage fehlerhaferweise noch Filterzigaretten mit Filtern der ersten Filterart befinden. Diese können erfindungsgemäß dann erkannt und daraufhin ein (Fehler-)Signal erzeugt werden.

Bevorzugt ist im Übrigen dabei vorgesehen, die detektierte Filterzigarette mit der abweichenden Filterart im weiteren Verlauf des Verpackungsprozesses automatisch auszusondern.

Es versteht sich im Übrigen, dass die zu prüfende Filterzigarette bei der Prüfung bzw. bei der Bildaufnahme durch die Kamera Bestandteil einer Zigarettengruppe bzw. Filterzigarettengruppe sein kann, bei der sich jeweils in einer Gruppe mehrere übereinander angeordnete Reihen von innerhalb jeder Reihe nebeneinander angeordneten, (sich dabei insbesondere berührenden) Filterzigaretten befinden.

Eine andere Anwendung des erfindungsgemäßen Verfahrens betrifft den Fall, dass im Verpackungsprozess jeweils Zigarettengruppen gebildet werden, die Filterzigaretten einer ersten Filterart und Filterzigaretten einer zweiten, anderen Filterart umfassen (sowie ggf. Filterzigaretten einer oder mehrerer weiterer Filterarten), die dann als Gruppe gemeinsam in ein und dieselbe Zigarettenpackung verpackt werden.

Entsprechend würden sich dann in der gemeinsamen Zigarettenschachtel oder -packung Filterzigaretten mit unterschiedlichen Filterarten befinden. Für einen solchen Fall könnte dann für die Filterzigaretten jeder Filterart gegebenenfalls jeweils eine individuelle bzw. zugeordnete Soll-Anzahl festgelegt werden in der diese Filterzigaretten in der Gruppe vorhanden sein sollen. Beispielsweise könnte festgelegt sein, dass in der Zigarettenpackung jeweils zehn Filterzigaretten der Filterart A vorhanden sein sollen und zehn Filterzigaretten der Filterart B.

In einem solchen Fall würde erfindungsgemäß im Weiteren vorgesehen sein, zunächst die Filterarten sämtlicher Filterzigaretten der gemeinsamen Zigarettengruppe jeweils zu identifizieren und basierend hierauf dann die jeweils zugeordnete Ist-Anzahl zu bestimmen, mit der die Filterzigaretten der ersten Filterart A bzw. die Filterzigaretten der zweiten Filterart B in der Gruppe enthalten sind. Nachdem die Ist-Anzahlen jeweils für die beiden Filterarten A bzw. B bestimmten sind, können diese dann jeweils mit der ihnen zugeordneten Soll-Anzahl für die Filterzigaretten der Filterart A bzw. der Filterart B verglichen werden.

Sofern es dann eine Abweichung zwischen der Ist-Anzahl der Filterzigaretten der ersten Filterart A und der ihr zugeordneten Soll-Anzahl gibt oder eine Abweichung zwischen der Ist-Anzahl der Filterzigaretten der zweiten Filterart B von der ihr zugeordneten Soll-Anzahl, könnte ein (Fehler-)Signal erzeugt werden.

Im weiteren Verlauf kann dann vorgesehen sein, die entsprechende Filterzigarettengruppe aus dem Verpackungsprozess auszusondern.

Gemäß einer weiteren Anwendung des erfindungsgemäßen Verfahrens kann vorgesehen sein, nach Maßgabe der auf die vorgenannte Art und Weise identifizierten Filterart der zu prüfenden Filterzigarette bzw. abhängig von dieser (weitere) Prüfungen der Filterzigarette oder der Filterzigarettengruppe durchzuführen. So könnte beispielsweise aus einer Anzahl hinterlegter Bild-Auswertealgorithmen zur Auswertung der Bildinformationen der Bildaufnahme der Filterstirnseite (bzw. des Teilbereichs desselben) ein bestimmter, für die jeweilige Filterart vorteilhafter Algorithmus ausgewählt werden.

Insofern es sich bei der erkannten Filterart beispielsweise um Hohlfilter handelt, könnten beispielsweise besondere Auswertealgorithmen eingesetzt werden, die für die Auswertung von Bildaufnahmen von Hohlfilterstirnseiten besonders geeignet sind. Beispielsweise die weiter unten noch näher beschriebene Suche nach einer (weiteren) kreisförmigen Konturlinie in der Bildaufnahme, die den Rand der zylindrischen Vertiefung des Hohlfilters umgibt.

Zusätzlich oder alternativ können weitere Prüfungen der Filter der Filterzigaretten oder anderer Bereiche der Filterzigaretten oder Filterzigarettengruppen natürlich auch unabhängig von der detektierten Filterart durchgeführt werden.

Was die Bildinformationen in der von der jeweiligen Filterzigarette aufgenommenen Bildaufnahme - im Weiteren auch als Prüfbild bezeichnet - betrifft, anhand der die Identifizierung der jeweiligen Filterart erfolgt, so können dies Bildobjekte in dem Prüfbild sein, wie etwa Muster, geometrische Formen, Symbole, alphanumerische Zeichen oder dergleichen. Wenn es sich bei den Filterzigaretten beispielsweise um Hohlfilterzigaretten handelt, vgl. oben, deren Filter jeweils eine zentrale, insbesondere zylindrische Vertiefung aufweisen, zeigt sich diese in dem Prüfbild der Stirnseite der jeweiligen Hohlfilterzigaretten als entsprechendes Bildobjekt.

Alternativ oder zusätzlich können die Bildinformationen auch Farb- und/oder Intensitätsinformationen in dem Prüfbild sein. So könnte die Filterart einer Filterzigarette beispielsweise auch anhand der Farbe der Filterstirnfläche bzw. der entsprechenden Bildpunkte in dem Bild derselben erkannt werden und/oder anhand der Intensität der Bildpunkte bzw. der jeweiligen Bereiche der Filterstirnfläche.

Was den konkreten Ablauf des erfindungsgemäßen Verfahrens betrifft, so können die vorgenannten Bildinformationen, anhand der die Identifizierung der jeweiligen Filterart erfolgt, automatisch aus dem aufgenommenen Bild extrahiert werden, insbesondere durch geeignete Bild-Auswerteverfahren (Bildanalysesoftware), und jeweils verglichen werden mit den zu den einzelnen Filterarten (in dem Datenspeicher) jeweils hinterlegten Bildinformationen. Für den Fall, dass die extrahierten Bildinformationen den zu einer Filterart in dem Datenspeicher hinterlegten und dieser zugeordneten Bildinformationen entsprechen oder diesen in einem vorbestimmten Maß ähneln, kann die Filterart der zu prüfenden Filterzigarette als der Filterart entsprechend bewertet bzw. identifiziert werden, der die hinterlegten Bildinformationen zugeordnet sind. Mit anderen Worten wird in dem Datenspeicher bzw. in einer entsprechenden Datenbank des Datenspeichers nach den extrahierten Bildinformationen oder diesen ähnlichen Bildinformationen gesucht und, falls diese vorhanden sind, ermittelt, welcher Filterart bzw. welcher diese repräsentierenden Kennung diese in dem Datenspeicher zugeordnet sind. Die Kennung der Filterart kann dabei im einfachsten Fall eine eindeutige Nummer sein oder ein sonstiger eindeutiger Identifizierungscode.

Vorteilhafterweise wird vor der Identifizierung der Filterart der zu prüfenden Zigarette zunächst in der Bildaufnahme die Außenkonturlinie der Stirnseite des Filters der Filterzigarette ermittelt. Hierfür gibt es im Stand der Technik bereits geeignete Verfahren, vgl. beispielsweise die EP 2 748 796 A1. Vorzugsweise erfolgt die Auswertung der Bildinformationen der Bildaufnahme, anhand der die Identifizierung der jeweiligen Filterart erfolgt, dann nur in einem insbesondere kreisförmigen Auswertebereich, der ein von der Außenkonturlinie der Stirnseite umfasster, insbesondere kreisförmiger Teilbereich derselben ist, wobei die äußere Begrenzungslinie des Teilbereichs jeweils von der Außenkonturlinie beabstandet ist.

Wie oben bereits angedeutet wurde, können zur Identifizierung der Filterart der zu prüfenden Filterzigarette die Bildinformationen der Bildaufnahme - insbesondere bei Hohlfilterzigaretten - auch daraufhin analysiert werden, ob zusätzlich zu der Außenkonturlinie eine von dieser umfasste, kreisförmige Konturlinie in der Bildaufnahme vorhanden ist, insbesondere innerhalb des Auswertebereichs. Gerade bei der Verwendung von Hohlfiltern ist eine solche Analyse vorteilhaft, da der zentrale, insbesondere zylindrische vertiefte Bereich des Filters in der Stirnseitenansicht bzw. der entsprechenden Bildaufnahme eine entsprechende, in der Regel kreisförmige Konturlinie aufweist, die sich als entsprechende Bildinformation in dem Prüfbild wiederfindet.

Für die Durchführung des erfindungsgemäßen Verfahrens kann eine erfindungsgemäße Vorrichtung entsprechend Anspruch 15 vorgesehen sein. Eine solche weist folgende Merkmale auf:
a) Eine an einer Prüfstation einer Verpackungsmaschine zur Verpackung von Zigaretten anordenbare oder angeordnete Kamera, mit der jeweils das Bild mindestens eines Teilbereichs der Stirnseite des Filters der jeweils zu prüfenden Filterzigarette aufgenommen werden kann.
b) Eine Auswerteeinrichtung, die derart ausgebildet ist, dass mit ihr anhand von in dem aufgenommenen Bild enthaltenen Bildinformationen aus einem der Auswerteeinrichtung zugeordneten elektronischen Datenspeicher, in dem unterschiedliche Filterarten, insbesondere Kennungen dieser Filterarten, jeweils unterschiedliche Bildinformationen zugeordnet sind, diejenige Filterart identifizierbar ist, die dem Filter der zu prüfenden Filterzigarette entspricht. Bei einer solchen Auswerteeinrichtung kann es sich um eine Computer- oder Recheneinrichtung (PC oder dergleichen) handeln, die softwaretechnisch so ausgebildet ist, dass die vorgenannten Schritte ausführbar sind.
c) Eine Steuerungseinrichtung, die derart ausgebildet ist, dass mit ihr mindestens ein weiterer Verfahrensschritt im Zigaretten-Verpackungsprozess abhängig von der auf die vorgenannte Weise identifizierten Filterart der zu prüfenden Filterzigarette ausführbar ist.

Weitere Merkmale der vorliegenden Erfindung ergeben sich aus den beigefügten Patentansprüchen, aus der nachfolgenden weiteren Erläuterung der Erfindung anhand eines bevorzugten Ausführungsbeispiels sowie aus den beigefügten Zeichnungen. Darin zeigt:
- Fig. 1: exemplarisch eine Prüfsituation, in der eine Kamera die Stirnseiten von Filterzigaretten einer Zigarettengruppe erfasst,

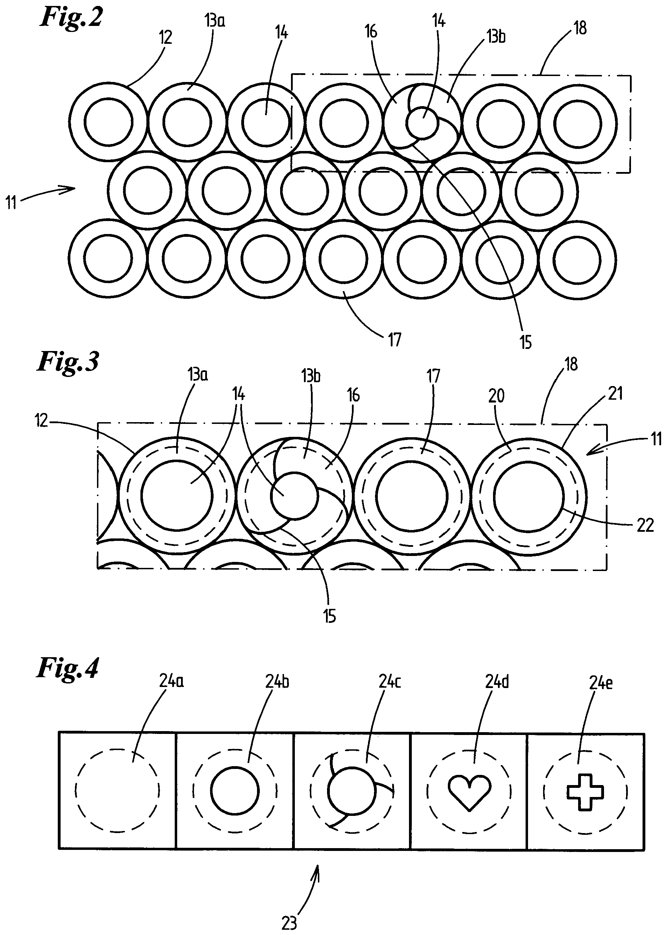

- Fig. 2: eine Stirnansicht der gesamten Zigarettengruppe aus Fig. 1,
- Fig. 3: einen Prüfbildausschnitt aus der Stirnseitenansicht der Zigarettengruppe aus Fig. 2,
- Fig. 4: exemplarisch eine Datenbank mit zu einzelnen Filterarten von Filterzigaretten hinterlegten Bildinformationen.

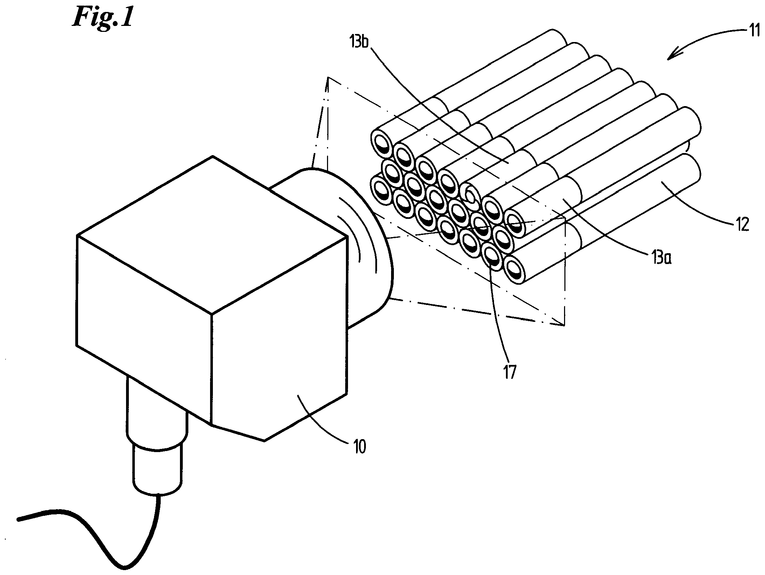

In Fig. 1 ist eine (elektronische) Kamera 10 gezeigt, deren Blickrichtung auf eine Zigarettengruppe 11 gerichtet ist. Die Zigarettengruppe 11 umfasst (vorliegend drei) übereinander angeordnete Reihen von Filterzigaretten 12.

Das erfindungsgemäße Verfahren erfolgt - wie bereits eingangs erwähnt - im Zusammenhang mit der Verpackung solcher Zigarettengruppen 11 in Zigarettenschachteln bzw. Zigarettenpackungen, insbesondere des Typs Klappschachtel, d.h. während des Verpackungsprozesses derselben. Die Fertigung dieser Zigarettenpackungen bzw. die Verpackung der Filterzigaretten 12 wird dabei durch eine an sich bekannte Verpackungsanlage für Zigaretten bzw. durch jeweils entsprechende Fertigungseinheiten/-maschinen einer solchen Verpackungsanlage vorgenommen. Auf die Einzelheiten derselben muss daher nicht näher eingegangen werden.

An verschiedenen Stellen dieses Verpackungsprozesses kann es gewünscht oder erforderlich sein, die Zigarettengruppen 11 unter Verwendung einer bzw. der Kamera 10 optisch zu prüfen und abhängig von dem Prüfergebnis Maßnahmen zu treffen bzw. die Verpackungsanlage und den Verpackungsprozess geeignet zu steuern. So können auf diese Weise Qualitäts- oder Anwesenheitskontrollen der Filterzigaretten 12 durchgeführt werden und bestimmten Anforderungen nicht entsprechende Gruppen 11 bzw. Filterzigaretten 12 aus dem Verpackungsprozess als fehlerhaft ausgeschleust werden. Die Kamera 10 ist dabei Teil einer Prüfvorrichtung, die des Weiteren über eine mit einer geeigneten Bildauswertesoftware ausgestattete Auswerteeinrichtung, beispielsweise einen PC oder dergleichen, verfügt.

Wie erkennbar ist, weist die Gruppe 11 Filterzigaretten 12 mit unterschiedlichen Filtern 13a und 13b auf. Bei den Filtern 13a handelt es sich um klassische Hohlfilter mit ausschließlich zentraler, zylindrischer Vertiefung 14 und bei dem Filter 13b um einen Filter, bei dem eine zentrale Vertiefung 14 radial außen von drei weiteren, in Umfangsrichtung aufeinander folgenden, jeweils durch Wandungen 15 von einander getrennten Vertiefungen oder Freimachungen 16 umgeben ist.

Erfindungsgemäß ist nun vorgesehen, mittels der Prüfvorrichtung die unterschiedlichen Filter 13a, 13b identifizieren und unterscheiden zu können.

Zu diesem Zweck ist die Blickrichtung der Kamera 10 auf die Filterstirnseiten oder Filterstirnflächen 17 der Filter 13a, 13b der Filterzigaretten 12 der Gruppe 11 gerichtet, in diesem Fall senkrecht auf eine gemeinsame Ebene, in der die Filterstirnseiten 17 der Gruppe liegen.

Die Kamera 10 nimmt ein Bild bzw. Prüfbild von einigen oder bevorzugt sämtlichen Filterstirnseiten 17 auf. Entweder das gesamte Prüfbild oder ein Teil desselben wird im Anschluss von der Auswerteeinrichtung mittels geeigneter Bildauswerteverfahren (Software) analysiert. Im vorliegenden Fall beispielsweise ein einzelner Prüfbildausschnitt 18 desselben.

Im Rahmen der Bildanalyse werden von der Bildauswertesoftware der Auswerteinrichtung in dem Prüfbildausschnitt 18 die Positionen der Filterstirnseiten 17 der Filter 13a, 13b der Filterzigaretten 12 bestimmt sowie die Außenkonturlinien 21 derselben. Hierfür gibt es im Stand der Technik bereits geeignete Verfahren, vgl. beispielsweise die EP 2 748 796 A1, deren Inhalt zum Zwecke der Offenbarung in die vorliegende Anmeldung integriert wird.

Für jede Filterzigarette 12 bzw. für jede Filterstirnseite 17 wird dabei ein Stirnseitenprüfbereich 20 als im vorliegenden Fall kreisförmiger, von der jeweiligen Außenkonturlinie 21 umfasster (kleinerer) Teilbereich der jeweiligen Filterstirnseite 17 festgelegt, der jeweils von einer Begrenzungslinie 22 begrenzt ist, und in dem für jeden Filter 13a, 13b jeder Filterzigarette 12 des Prüfbildausschnitts 18 die weitere Auswertung der Bildinformationen erfolgt.

Die in dem Stirnseitenprüfbereich 20 enthaltenen Bildinformationen werden anschließend von der Bildauswertesoftware der Auswerteeinrichtung analysiert. Vorliegend werden die Bildinformationen dabei mit in einem der Auswerteeinrichtung zugeordneten Datenspeicher 23 hinterlegten Soll-Bildern von verschiedenen Arten 24a-e von Filterstirnseiten verglichen. In dem Datenspeicher 23 bzw. einer entsprechenden Datenbank sind zu diesem Zweck verschiedene Filterarten bzw. Filtertypen (bzw. eindeutigen Kennungen derselben), jeweils unterschiedliche Soll-Bilder von unterschiedlichen Filterarten 24a-e zugeordnet.

Im Rahmen dieses Vergleichs identifiziert die Auswerteeinrichtung auf diese Weise die Filter 13a sowie den Filter 13b der Filterzigaretten 12 der Gruppe 11 als Filterart 24b bzw. 24c.

Nach erfolgter Identifizierung werden dann abhängig von der jeweils detektierten Filterart 24b bzw. 24c eine oder mehrere der bereits eingangs umfassend beschriebenen Maßnahmen ergriffen. Im vorliegenden Fall kann beispielsweise die gesamte Gruppe 11 aus dem Verpackungsprozess ausgesondert werden, falls sich die Filterzigarette 12 mit der Filterart 13b - beispielsweise nach einem Brandchange - fehlerhafter Weise in der Gruppe 11 befindet.

### Bezugszeichenliste:

- 10: Kamera
- 11: Zigarettengruppe
- 12: Filterzigaretten
- 13a,b: Filter
- 14: Vertiefung
- 15: Wandungen
- 16: Vertiefungen
- 17: Filterstirnseiten
- 18: Prüfbildausschnitt
- 20: Stirnseitenprüfbereich
- 21: Außenkonturlinie
- 22: Begrenzungslinie
- 23: Datenspeicher
- 24a-e: Filterart

## Patentansprüche

1. Verfahren zum Prüfen von Filterzigaretten (12) in einem Verpackungsprozess, in dem die Filterzigaretten (12) in Zigarettenpackungen verpackt werden, und zum weiteren Handhaben der Filterzigaretten (12) während des Verpackungsprozesses, mit folgenden Schritten:
a) innerhalb des Verpackungsprozesses wird mittels einer Kamera (10) jeweils ein Bild mindestens eines Teilbereichs der Stirnseite des Filters (13a, b) der jeweils zu prüfenden Filterzigarette (12) aufgenommen,
**dadurch gekennzeichnet, dass**:
b) anhand von in dem aufgenommenen Bild enthaltenen Bildinformationen aus einem elektronischen Datenspeicher (23), in dem unterschiedlichen Filterarten (24a-e), insbesondere Kennungen dieser Filterarten (24a-e), jeweils unterschiedliche Bildinformationen zugeordnet sind, diejenige Filterart (24a-e) identifiziert wird, die dem Filter (13a, b) der zu prüfenden Filterzigarette (12) entspricht,
c) mindestens ein weiterer Verfahrensschritt im Verpackungsprozess erfolgt abhängig von der auf diese Weise identifizierten Filterart (24a-e) der zu prüfenden Filterzigarette (12).

2. Verfahren gemäß Anspruch 1, **dadurch gekennzeichnet, dass** in dem Verpackungsprozess ausschließlich Filterzigaretten (12) mit jeweils einer ersten Filterart (24a-e) in die Zigarettenpackungen verpackt werden sollen, und dass für den Fall, dass die Prüfung der zu prüfenden Filterzigaretten (12) ergibt, dass die zu prüfende Filterzigarette (12) eine hiervon abweichende, zweite Filterart (24a-e) aufweist, ein (Fehler-)Signal erzeugt wird, und vorzugsweise die Filterzigarette (12) mit der abweichenden Filterart (24a-e) im weiteren Verlauf des Verpackungsprozesses aus diesem automatisch ausgesondert wird.

3. Verfahren gemäß Anspruch 1 oder 2, **dadurch gekennzeichnet, dass** die Bildinformationen, anhand der die Identifizierung der jeweiligen Filterart (24a-e) erfolgt, Bildobjekte sind, wie etwa Muster, geometrische Formen, Symbole, alphanumerische Zeichen oder dergleichen.

4. Verfahren gemäß einem oder mehreren der vorhergehenden Ansprüche, **dadurch gekennzeichnet, dass** die Bildinformationen, anhand der die Identifizierung der jeweiligen Filterart (24a-e) erfolgt, Farb- und/oder Intensitätsinformationen sind.

5. Verfahren gemäß einem oder mehreren der vorhergehenden Ansprüche, **dadurch gekennzeichnet, dass** die Bildinformationen, anhand der die Identifizierung der jeweiligen Filterart (24a-e) erfolgt, aus dem aufgenommenen Bild extrahiert werden und jeweils verglichen werden mit den zu den einzelnen Filterarten (24a-e) insbesondere als Soll-Bilder hinterlegten Bildinformationen, und dass für den Fall, dass die extrahierten Bildinformationen den zu einer Filterart (24a-e) in dem Datenspeicher (23) hinterlegten Bildinformationen entsprechen oder diesen in einem vorbestimmten Maß ähneln, die Filterart (24a-e) der zu prüfenden Filterzigarette (12) als der Filterart (24a-e) entsprechend bewertet wird, der die hinterlegten Bildinformationen zugeordnet sind.

6. Verfahren gemäß einem oder mehreren der vorhergehenden Ansprüche, **dadurch gekennzeichnet, dass** vor der Identifizierung der Filterart (24a-e) der zu prüfenden Filterzigarette (12) die Außenkonturlinie der Stirnseite des Filters (13a, b) der Filterzigarette (12) in der Bildaufnahme ermittelt wird.

7. Verfahren gemäß Anspruch 6, **dadurch gekennzeichnet, dass** die Auswertung der Bildinformationen der Bildaufnahme, anhand der die Identifizierung der jeweiligen Filterart (24a-e) erfolgt, nur in einem insbesondere kreisförmigen Auswertebereich erfolgt, der ein von der Außenkonturlinie umfasster, insbesondere kreisförmiger Teilbereich der Stirnseite ist, dessen äußere Begrenzungslinie von der Außenkonturlinie beabstandet ist.

8. Verfahren gemäß Anspruch 6 oder 7, **dadurch gekennzeichnet, dass** zur Identifizierung der Filterart (24a-e) der zu prüfenden Filterzigarette (12) die Bildinformationen der Bildaufnahme daraufhin analysiert werden, ob zusätzlich zu der Außenkonturlinie eine von dieser umfasste, kreisförmige Konturlinie in der Bildaufnahme vorhanden ist, insbesondere innerhalb des Auswertebereichs.

9. Verfahren gemäß einem oder mehreren der vorhergehenden Ansprüche, **dadurch gekennzeichnet, dass** nach Maßgabe der identifizierten Filterart (24a-e) der zu prüfenden Filterzigarette (12) (weitere) Auswertungen der Bildinformationen der Bildaufnahme durchgeführt werden, insbesondere zur Prüfung des Filters (13a, b) der Filterzigarette (12) auf etwaige Fehler.

10. Verfahren gemäß einem oder mehreren der vorhergehenden Ansprüche, **dadurch gekennzeichnet, dass** die Filterzigarette (12) geprüft und deren Filterart (24a-e) identifiziert wird, während sich die Filterzigarette (12) innerhalb einer Zigarettengruppe (11) aus jeweils mehreren übereinander angeordneten Reihen von innerhalb jeder Reihe nebeneinander angerordneten Filterzigaretten (12) befindet bzw. ein Element derselben ist.

11. Verfahren gemäß Anspruch 10, **dadurch gekennzeichnet, dass** eine gemeinsame Bildaufnahme von den Filterstirnseiten der Filterzigaretten (12) der gesamten Zigarettengruppe (11) gemacht wird, und dass anhand der Bildinformationen mindestens eines Teilbereichs jeder Filterstirnseite jeder Filterzigarette (12) der Gruppe (11) die Identifizierung der jeweiligen Filterart der jeweiligen Filterzigarette erfolgt.

12. Verfahren gemäß Anspruch 11, **dadurch gekennzeichnet, dass** anhand der Bildinformationen die Ist-Anzahl von Zigaretten (12) in der Gruppe (11) bestimmt wird, und dass für den Fall, dass diese Ist-Anzahl von einer vorgegebenen Soll-Anzahl abweicht, ein (Fehler-)Signal erzeugt wird.

13. Verfahren gemäß Anspruch 10, 11 oder 12, **dadurch gekennzeichnet, dass** im Verpackungsprozess Zigarettengruppen (11) gebildet werden, die Filterzigaretten (12) einer ersten Filterart (24a-e) sowie Filterzigaretten (12) einer zweiten, anderen Filterart (24a-e) umfassen, und die jeweils als Gruppe (11) in eine gemeinsame Zigarettenpackung verpackt werden, wobei für die jeweils zu der gleichen Filterart (24a-e) gehörenden Filterzigaretten (12) jeweils eine Soll-Anzahl festgelegt ist, in der diese insgesamt jeweils in der Gruppe (11) enthalten sein sollen, wobei die Filterarten (24a-e) sämtlicher Filterzigaretten (12) der jeweiligen Zigarettengruppe (11) identifiziert werden, und wobei die jeweilige Ist-Anzahl, mit der die Filterzigaretten (12) mit der ersten Filterart (24a-e) bzw. die Filterzigaretten (12) mit der zweiten Filterart (24a-e) in der Gruppe (11) enthalten sind, bestimmt wird und jeweils mit der jeweils zugeordneten Soll-Anzahl für die Filterzigaretten (12) mit der ersten bzw. der zweiten Filterart (24a-e) verglichen wird.

14. Verfahren gemäß Anspruch 13, **dadurch gekennzeichnet, dass** ein (Fehler-)Signal erzeugt wird für den Fall, dass die Ist-Anzahl der Filterzigaretten (12) mit der ersten Filterart (24a-e) von der ihr zugeordneten Soll-Anzahl abweicht oder die Ist-Anzahl der Filterzigaretten (12) mit der zweiten Filterart (24a-e) von der ihr zugeordneten Soll-Anzahl.

15. Vorrichtung zum Prüfen von Filterzigaretten (12) in einem Verpackungsprozess, in dem die Filterzigaretten (12) in Zigarettenpackungen verpackt werden, und zum weiteren Handhaben der Filterzigaretten (12) im Verpackungsprozess, zur Durchführung des Verfahrens gemäß Anspruch 1, mit folgenden Merkmalen:
a) einer an einer Prüfstation einer Verpackungsmaschine zur Verpackung von Zigaretten (12) anordenbaren Kamera (10), mit der jeweils ein Bild mindestens eines Teilbereichs der Stirnseite des Filters (13a, b) der jeweils zu prüfenden Filterzigarette (12) aufgenommen werden kann,
**gekennzeichnet durch** die folgenden Merkmale:
b) einer Auswerteeinrichtung, die derart ausgebildet ist, dass mit ihr anhand von in dem aufgenommenen Bild enthaltenen Bildinformationen aus einem der Auswerteeinrichtung zugeordneten elektronischen Datenspeicher (23), in dem unterschiedlichen Filterarten (24a-e), insbesondere Kennungen dieser Filterarten (24a-e), jeweils unterschiedliche Bildinformationen zugeordnet sind, diejenige Filterart (24a-e) identifizierbar ist, die dem Filter (13a, b) der zu prüfenden Filterzigarette (12) entspricht,
c) einer Steuerungseinrichtung, die derart ausgebildet ist, dass mit ihr mindestens ein weiterer Verfahrensschritt im Verpackungsprozess abhängig von der auf diese Weise identifizierten Filterart (24a-e) der zu prüfenden Filterzigarette (12) ausführbar ist.

## Claims

1. Method for testing filter cigarettes (12) in a packaging process, in which the filter cigarettes (12) are packaged in cigarette packs, and for further handling of the filter cigarettes (12) during the packaging process, having the following steps:
a) within the packaging process, a camera (10) is used to record in each case an image of at least a partial region of the end side (13a, b) of the filter cigarette (12) being tested in each case,
**characterized in that**:
b) on the basis of the image information items contained in the recorded image, the type of filter (24a-e) corresponding to the filter (13a, b) of the filter cigarette (12) being tested is identified from an electronic data store (23), in which different types of filter (24a-e), in particular identifiers of said types of filter (24a-e), are in each case assigned different image information items,
c) at least one further method step in the packaging process takes place depending on the type of filter (24a-e), which is identified in this manner, of the filter cigarette (12) being tested.

2. Method according to Claim 1, **characterized in that**, in the packaging process, only filter cigarettes (12) having in each case a first type of filter (24a-e) are intended to be packaged in the cigarette packs, and **in that**, in the event that the testing of the filter cigarettes (12) being tested reveals that the filter cigarette (12) being tested has a differing, second type of filter (24a-e), an (error) signal is generated, and the filter cigarette (12) having the differing type of filter (24a-e) is preferably automatically separated from the packaging process during the further course thereof.

3. Method according to Claim 1 or 2, **characterized in that** the image information items, on the basis of which the respective type of filter (24a-e) is identified, are image objects, such as, for example, patterns, geometrical shapes, symbols, alphanumeric characters or the like.

4. Method according to one or more of the preceding claims, **characterized in that** the image information items, with reference to which the respective type of filter (24a-e) is identified, are colour and/or intensity information items.

5. Method according to one or more of the preceding claims, **characterized in that** the image information items, on the basis of which the respective type of filter (24a-e) is identified, are extracted from the recorded image and are in each case compared with the image information items stored, in particular as desired images, for the individual types of filter (24a-e), and **in that**, in the event that the extracted image information items correspond to the image information items for a type of filter (24a-e) stored in the data store (23) or resemble said image information items to a predetermined extent, the type of filter (24a-e) of the filter cigarette (12) being tested is correspondingly assessed as the type of filter (24a-e) to which the stored image information items are assigned.

6. Method according to one or more of the preceding claims, **characterized in that**, prior to the identification of the type of filter (24a-e) of the filter cigarette (12) being tested, the outer contour line of the end side of the filter (13a, b) of the filter cigarette (12) in the image recording is determined.

7. Method according to Claim 6, **characterized in that** the image information items of the image recording, on the basis of which the respective type of filter (24a-e) is identified, is evaluated only in an in particular circular evaluation region which is an in particular circular partial region of the end side that is surrounded by the outer contour line and the outer boundary line of which is spaced apart from the outer contour line.

8. Method according to Claim 6 or 7, **characterized in that**, in order to identify the type of filter (24a-e) of the filter cigarette (12) being tested, the image information items of the image recording are analysed as to whether, in addition to the outer contour line, there is a circular contour line, which is surrounded by the latter, in the image recording, in particular within the evaluation region.

9. Method according to one or more of the preceding claims, **characterized in that**, on the basis of the identified type of filter (24a-e) of the filter cigarette (12) being tested, (further) evaluations of the image information items of the image recording are carried out, in particular for testing the filter (13a, b) of the filter cigarette (12) for possible errors.

10. Method according to one or more of the preceding claims, **characterized in that** the filter cigarette (12) is tested and the type of filter (24a-e) thereof is identified while the filter cigarette (12) is located within a cigarette group (11) consisting in each case of a plurality of rows, arranged one above another, of filter cigarettes (12) which are arranged next to one another within each row, or is an element of said filter cigarette.

11. Method according to Claim 10, **characterized in that** a common image recording of the filter end sides of the filter cigarettes (12) of the entire cigarette group (11) is made, and **in that** the respective type of filter of the respective filter cigarette is identified on the basis of the image information items of at least a partial region of each filter end side of each filter cigarette (12) of the group (11) .

12. Method according to Claim 11, **characterized in that**, on the basis of the image information items, the actual number of cigarettes (12) in the group (11) is determined, and **in that**, in the event that said actual number differs from a predetermined desired number, an (error) signal is generated.

13. Method according to Claim 10, 11 or 12, **characterized in that**, in the packaging process, cigarette groups (11) are formed, which comprise filter cigarettes (12) of a first type of filter (24a-e) and filter cigarettes (12) of a second, different type of filter (24a-e), and which are in each case packaged as a group (11) into a common cigarette pack, wherein, for the filter cigarettes (12) belonging in each case to the same type of filter (24a-e), in each case a desired number in which said filter cigarettes as a whole are intended to be contained in each case in the group (11) is established, wherein the types of filter (24a-e) of all of the filter cigarettes (12) of the respective cigarette group (11) are identified, and wherein the respective actual number with which the filter cigarettes (12) having the first type of filter (24a-e) and the filter cigarettes (12) having the second type of filter (24a-e) are contained in the group (11) is determined and is compared in each case with the respectively assigned desired number for the filter cigarettes (12) having the first or the second type of filter (24a-e).

14. Method according to Claim 13, **characterized in that** an (error) signal is generated in the event that the actual number of filter cigarettes (12) having the first type of filter (24a-e) differs from the desired number assigned thereto, or the actual number of the filter cigarettes (12) having the second type of filter (24a-e) differs from the desired number assigned thereto.

15. Device for testing filter cigarettes (12) in a packaging process, in which the filter cigarettes (12) are packaged in cigarette packs, and the further handling of the filter cigarettes (12) in the packaging process, for carrying out the method according to Claim 1, having the following features:
a) a camera (10) which can be arranged at a testing station of a packaging machine for packaging cigarettes (12) and which can be used to in each case record an image of at least a partial region of the end side of the filter (13a, b) of the filter cigarette (12) being tested in each case,
**characterized by** the following features:
b) an evaluation device which is designed in such a manner that the type of filter (24a-e) which corresponds to the filter (13a, b) of the filter cigarette (12) being tested can be identified with said evaluation device on the basis of image information items, which are contained in the recorded image, from an electronic data store (23) which is assigned to the evaluation device and in which different types of filter (24a-e), in particular identifiers of said types of filter (24a-e), are in each case assigned different image information items,
c) a control device which is designed in such a manner that at least one further method step can be carried out therewith in the packaging process depending on the type of filter (24a-e), identified in this manner, of the filter cigarette (12) being tested.

## Revendications

1. Procédé permettant de vérifier des cigarettes à filtre (12) dans un processus d'emballage, dans lequel les cigarettes à filtre (12) sont emballées dans des paquets de cigarettes, et de manipuler ultérieurement des cigarettes à filtre (12) pendant le processus d'emballage, comprenant les étapes suivantes :
a) au cours du processus d'emballage, une caméra (10) enregistre respectivement une image d'au moins une zone partielle de la face frontale du filtre (13a, b) de la cigarette à filtre (12) à vérifier respectivement,
**caractérisé en ce que** :
b) à l'aide d'informations d'image contenues sur l'image enregistrée provenant d'une mémoire de données électronique (23), dans laquelle différentes informations d'image sont associées respectivement à différents types de filtre (24a-e), en particulier des identifiants de ces types de filtre (24a-e), le type de filtre (24a-e) est identifié, qui correspond au filtre (13a, b) de la cigarette à filtre (12) à vérifier,
c) au moins une étape de procédé supplémentaire dans le processus d'emballage est effectuée en fonction du type de filtre (24a-e) ainsi identifié de la cigarette à filtre (12) à vérifier.

2. Procédé selon la revendication 1, **caractérisé en ce que** dans le processus d'emballage, uniquement des cigarettes à filtre (12) munies respectivement d'un premier type de filtre (24a-e) sont à emballer dans les paquets de cigarettes, et **en ce que** dans le cas où la vérification des cigarettes à filtre (12) à vérifier aboutit à ce que la cigarette à filtre (12) à vérifier présente un deuxième type de filtre (24a-e) différent de celui-ci, un signal (d'erreur) est produit, et de préférence la cigarette à filtre (12) munie du type de filtre différent (24a-e) est éliminée automatiquement du processus dans la suite du processus d'emballage.

3. Procédé selon la revendication 1 ou 2, **caractérisé en ce que** les informations d'image, à l'aide desquelles l'identification du type de filtre (24a-e) respectif est effectuée, sont des objets image, tels que des motifs, des formes géométriques, des symboles, des caractères alphanumériques ou similaires.

4. Procédé selon une ou plusieurs des revendications précédentes, **caractérisé en ce que** les informations d'image, à l'aide desquelles l'identification du type de filtre respectif (24a-e) est effectuée, sont des informations de couleur et/ou d'intensité.

5. Procédé selon une ou plusieurs des revendications précédentes, **caractérisé en ce que** les informations d'image, à l'aide desquelles l'identification du type de filtre (24a-e) respectif est effectuée, sont extraites de l'image enregistrée et sont respectivement comparées aux informations d'image mémorisées concernant les types de filtre (24a-e) individuels, en particulier sous forme d'images théoriques, et **en ce que** dans le cas où les informations d'image extraites correspondent aux informations d'image concernant un type de filtre (24a-e) mémorisées dans la mémoire de données (23), ou ressemblent à celles-ci dans une mesure prédéterminée, le type de filtre (24a-e) de la cigarette à filtre (12) à vérifier est évalué comme correspondant au type de filtre (24a-e) auquel les informations d'image mémorisées sont associées.

6. Procédé selon une ou plusieurs des revendications précédentes, **caractérisé en ce que** la ligne de contour extérieur de la face frontale du filtre (13a, b) de la cigarette à filtre (12) est déterminée sur l'enregistrement d'image avant l'identification du type de filtre (24a-e) de la cigarette à filtre (12) à vérifier.

7. Procédé selon la revendication 6, **caractérisé en ce que** l'évaluation des informations d'image de l'enregistrement d'image, à l'aide desquelles l'identification du type de filtre (24a-e) respectif est effectuée, n'est effectuée que dans une zone d'évaluation en particulier circulaire qui est une zone partielle de la face frontale entourée de la ligne de contour extérieur, en particulier circulaire, dont la ligne de bordure extérieure est espacée de la ligne de contour extérieur.

8. Procédé selon la revendication 6 ou 7, **caractérisé en ce que** pour l'identification du type de filtre (24a-e) de la cigarette à filtre (12) à vérifier, les informations d'image de l'enregistrement d'image sont analysées pour savoir s'il existe en plus de la ligne de contour extérieur une ligne de contour circulaire entourée de celle-ci sur l'enregistrement d'image, en particulier dans la zone d'évaluation.

9. Procédé selon une ou plusieurs des revendications précédentes, **caractérisé en ce que** selon la spécification du type de filtre (24a-e) identifié de la cigarette à filtre (12) à vérifier, des évaluations (supplémentaires) des informations d'image de l'enregistrement d'image sont effectuées, en particulier pour vérifier le filtre (13a, b) de la cigarette à filtre (12) quant à des erreurs possibles.

10. Procédé selon une ou plusieurs des revendications précédentes, **caractérisé en ce que** la cigarette à filtre (12) est vérifiée et son type de filtre (24a-e) est identifié pendant que la cigarette à filtre (12) se trouve à l'intérieur d'un groupe de cigarettes (11) respectivement composé de plusieurs rangées disposées les unes au-dessus des autres de cigarettes à filtre (12) disposées les unes à côté des autres à l'intérieur de chaque rangée ou est un élément de celui-ci.

11. Procédé selon la revendication 10, **caractérisé en ce qu'**un enregistrement d'image commun des faces frontales de filtre des cigarettes à filtre (12) du groupe de cigarettes (11) entier est effectué, et **en ce que** l'identification du type de filtre respectif de chaque cigarette à filtre est effectuée à l'aide des informations d'image au moins d'une zone partielle de chaque face frontale de filtre de chaque cigarette à filtre (12) du groupe (11).

12. Procédé selon la revendication 11, **caractérisé en ce que** le nombre réel de cigarettes (12) dans le groupe (11) est déterminé à l'aide des informations d'image, et **en ce que** dans le cas où ce nombre réel est différent d'un nombre théorique spécifié, un signal (d'erreur) est produit.

13. Procédé selon la revendication 10, 11 ou 12, **caractérisé en ce que** dans le processus d'emballage, des groupes de cigarettes (11) sont formés, qui comprennent des cigarettes à filtre (12) d'un premier type de filtre (24a-e) ainsi que des cigarettes à filtre (12) d'un deuxième type de filtre (24a-e) différent, et qui sont respectivement emballés par groupe (11) dans un paquet de cigarettes commun, dans lequel respectivement pour les cigarettes à filtre (12) appartenant au même type de filtre (24a-e), respectivement un nombre théorique est fixé selon lequel celles-ci doivent être contenues au total dans le groupe (11) respectivement, dans lequel les types de filtre (24a-e) de toutes les cigarettes à filtre (12) du groupe de cigarettes respectif (11) sont identifiés, et dans lequel le nombre réel respectif selon lequel les cigarettes à filtre (12) munies du premier type de filtre (24a-e) ou les cigarettes à filtre (12) munies du deuxième type de filtre (24a-e) sont contenues dans le groupe (11) est déterminé et est comparé respectivement au nombre théorique respectivement associé pour les cigarettes à filtre (12) munies du premier ou du deuxième type de filtre (24a-e).

14. Procédé selon la revendication 13, **caractérisé en ce qu'**un signal (d'erreur) est produit au cas où le nombre réel des cigarettes à filtre (12) munies du premier type de filtre (24a-e) est différent du nombre théorique qui lui est associé ou le nombre réel des cigarettes à filtre (12) munies du deuxième type de filtre (24a-e) est différent du nombre théorique qui lui est associé.

15. Dispositif permettant de vérifier des cigarettes à filtre (12) dans un processus d'emballage dans lequel les cigarettes à filtre (12) sont emballées dans des paquets de cigarettes, et de manipuler ultérieurement les cigarettes à filtre (12) dans le processus d'emballage, permettant d'exécuter le procédé selon la revendication 1, ayant les particularités suivantes :
a) une caméra (10) pouvant être disposée à un poste de vérification d'une machine d'emballage pour emballer des cigarettes (12), qui permet d'enregistrer respectivement une image d'au moins une zone partielle de la face frontale du filtre (13a, b) de la cigarette à filtre (12) à vérifier respectivement,
**caractérisé par** les particularités suivantes :
b) un dispositif d'évaluation qui est réalisé de telle sorte qu'il permet, à l'aide d'informations d'image contenues sur l'image enregistrée provenant d'une mémoire de données électronique (23) associée au dispositif d'évaluation et dans laquelle différentes informations d'image sont associées respectivement à différents types de filtre (24a-e), en particulier des identifiants de ces types de filtre (24a-e), d'identifier le type de filtre (24a-e) qui correspond au filtre (13a, b) de la cigarette à filtre (12) à vérifier,
c) un dispositif de commande qui est réalisé de telle sorte qu'il permet d'effectuer au moins une étape de procédé supplémentaire dans le processus d'emballage en fonction du type de filtre (24a-e) ainsi identifié de la cigarette à filtre (12) à vérifier.
